# EUROPÄISCHE PATENTSCHRIFT

(11) **EP 1 343 662 B1**
(45) Veröffentlichungstag und Bekanntmachung des Hinweises auf die Patenterteilung: **16.02.2005**
(21) Anmeldenummer: 01990335.0
(22) Anmeldetag: 19.12.2001
(51) Int. Cl.: B60R 21/09, B60T 7/06

(54) **VORRICHTUNG ZUR LAGERUNG EINES PEDALHEBELS EINES KRAFTFAHRZEUGES**
DEVICE FOR MOUNTING A PEDAL LEVER OF A MOTOR VEHICLE
DISPOSITIF POUR LE LOGEMENT D'UN LEVIER DE PEDALE DANS UN VEHICULE

(30) Priorität: 22.12.2000 DE 10064770
(43) Veröffentlichungstag der Anmeldung: 17.09.2003
(73) Patentinhaber: ZF Lemförder Metallwaren AG, 49441 Lemförde (DE)
(72) Erfinder: BURGSTALER, Andree, 32351 Dielingen (DE); DÜTZ, Jan, 49401 Damme (DE); PÄTZOLD, Simone, 49692 Cappeln (DE)
(86) Internationale Anmeldenummer: PCT/DE2001/004807
(87) Internationale Veröffentlichungsnummer: WO 2002/051669

(56) Entgegenhaltungen:
- EP-A- 0 827 874
- EP-A- 1 059 208
- DE-A- 10 028 117

## Beschreibung

Die Erfindung betrifft eine Vorrichtung zur Lagerung eines Pedalhebels für ein Kraftfahrzeug nach dem Oberbegriff des Patentanspruches 1, wie z.B. aus EP-A-0 827 874 bekannt ist.

Die zunehmenden Anforderungen an Kraftfahrzeuge hinsichtlich einer Erhöhung der Sicherheit zeigen sich in zahlreichen Systemen. Bei Pedalbefestigungen besteht ein bekanntes Unfallrisiko darin, dass eine Verformung des Vorderwagens sich unmittelbar oder mittelbar auf die Pedale auswirkt und diese in den Fußraum des Kraftfahrzeuges hinein bewegt werden. Die für den Fahrzeugführer damit verbundenen Risiken sind in schweren Verletzungen der unteren Gliedmaßen zu sehen, wie sie durch das Einklemmen zwischen den Pedalen hervorgerufen werden können.

Zur Vermeidung dieser Verletzungsrisiken sind Ablösemechanismen bekannt, die die durch einen Unfall verursachte Krafteinleitung von außen dazu nutzen, mindestens einen Trennkeil zwischen zwei Wangen eines den oder die Pedalhebel schwenkbar aufnehmenden Gehäuses zu treiben, um dadurch eine Freigabe des den Pedalhebel tragenden Lagerungsbolzens zu ermöglichen. Letztendlich haben sich diese Lösungen jedoch nicht bewährt, da die Montage derartiger Systeme recht aufwendig ist und zumindest die Verforrnungsbereiche aus metallischen Werkstoffen hergestellt werden. Im Zuge einer Gewichtsreduzierung der im Kraftfahrzeug vorhandenen Baugruppen ist es jedoch vorteilhaft, eine möglichst große Teilezahl aus Leichtbauwerkstoffen, wie beispielsweise Kunststoffen herzustellen.

Es ist technische Problemstellung der vorliegenden Erfindung, eine Vorrichtung zur Lagerung eines Pedalhebels zu schaffen, die das Verletzungsrisiko und den Schweregrad der Verletzungen des Fahrzeugführers herabsetzt.

Gelöst wird diese technische Problemstellung für eine gattungsgemäße Vorrichtung zur Lagerung eines Pedalhebels mit den kennzeichnenden Merkmalen des Patentanspruches 1.
Ausgestaltungen der Erfindung sind Gegenstand der Unteransprüche.

Dementsprechend weist die vorgestellte Erfindung einen Trennkeil auf, der sich mit einem Ende gegen ein Kraftfahrzeugbauteil abstützt. Hierzu ist an dem Trennkeil eine Stützfläche ausgebildet. Das gegenüberliegende Ende dieses Trennkeils wird zwischen einer Oberfläche des Gehäuses und dem Lagerelement aufgenommen. Somit kann erreicht werden, dass infolge einer durch einen Unfall verursachten äußeren Krafteinwirkung eine Relativbewegung zwischen Trennkeil und Lagerelement stattfindet, die unter Aufbringung einer Scherkraft die Abscherung des Lagerelementes bewirkt. Diese Relativbewegung ergibt sich entweder aus der Verformung des Kraftfahrezugbauteiles oder aus der Bewegung des Gehäuses, die ihrerseits aus einer Verformung von Teilen des Kraftfahrzeuges herrührt. Durch die erfindungsgemäße Lösung wird dementsprechend bewusst die Abscherung, das heißt die Zerstörung des Lagerelementes herbeigeführt, um den erforderlichen Insassenschutz zu gewährleisten. Als Lagerelement kann ein Lagerungsbolzen oder eine Lagerbuchse dienen, die den Pedalhebel schwenkbar lagern.

Die Vorrichtung ist insgesamt sehr einfach aufgebaut und kann nahezu vollständig aus Leichtbauwerkstoffen, wie Kunststoff hergestellt sein, sodass auch der Formgebung nahezu keine Grenzen gesetzt sind.

Gemäß einer Ausgestaltung der Erfindung wird vorgeschlagen, an dem Gehäuse ein Widerlager zur Anlage und gleitbeweglichen Führung des Trennkeiles vorzusehen. Dieses Widerlager kann eine Rampenfunktion aufweisen, sodass der Trennkeil seine Scherwirkung auf das Lagerelement ausüben kann. Zugleich ermöglicht dieses Widerlager im Normalbetrieb eine spielfreie Anlage des Trennkeiles zwischen Widerlager und Lagerelement.

Zur Verbesserung der Scherwirkung ist es vorteilhaft, den Trennkeil auf der dem Lagerelement zugewandten Seite mit mindestens einer keilförmigen oder bogenförmigen Wirkfläche auszustatten. Dadurch kann in Abhängigkeit vom zurückgelegten Weg des Trennkeiles eine klare Definition des Zeitpunktes festgelegt werden, zu dem das Lagerelement vollständig abgetrennt ist.

Eine Weiterbildung der Erfindung kann ferner darin gesehen werden, dass das Lagerelement zwei zueinander beabstandete Wangen des Gehäuses durchsetzt und der Pedalhebel etwa mittig zwischen diesen Wangen auf dem Lagerelement angeordnet wird. Dabei ist beiderseits des Pedalhebels ein Abstand zwischen dem Pedalhebel und der jeweils zugeordneten Wange vorhanden, sodass der zumindest in diesem Bereich mit zwei Schenkeln ausgestattete Trennkeil einerseits unmittelbar an dem Lagerelement und andererseits an dem Widerlager anliegt.

Wie zuvor bereits erwähnt kann die Relativbewegung zwischen Trennkeil und Lagerelement auch dadurch erreicht werden, dass das Kraftfahrzeugteil, an dem das Gehäuse befestigt ist, verformt wird. Dementsprechend ist es sinnvoll, das Gehäuse an der Stirnwand im Fußbereich der Fahrerseite des Kraftfahrzeuges zu befestigen, da die Stirnwand bei einem Unfall zumeist relativ stark verformt wird und dadurch die vorteilhafte Wirkung der erfindungsgemäßen Lösung bereits zu einem recht frühen Zeitpunkt erreicht wird. Das Kraftfahrzeugbauteil kann dementsprechend der nächstgelegene Querträger sein.

Zur Erleichterung der Abscherung ist es darüber hinaus angebracht und von Vorteil, das Lagerelement mit mindestens einer Sollbruchstelle zu versehen. Ferner kann das Lagerelement als ein einteiliger oder ein zweiteiliger Lagerbolzen ausgeführt werden. Die Zweiteilung hat insbesondere Montagevorteile. Hierbei ist jedoch sicherzustellen, dass bei einem Unfall jeder der Bolzenteile durch den Trennkeil abgeschert wird. Als Lagerelement ist entsprechend der Erfindung jedoch auch eine Lagerbuchse anzusehen, die ebenfalls durch die Wirkung der Scherkraft abscherbar ist.

Da beispielsweise das Bremspedal eines Kraftfahrzeuges mit einem Bremskraftverstärker verbunden ist und dieser über eine Bremsstange verfügt, kann sich die Verformung der Stirnwand in diesem Bereich besonders stark auswirken, sodass die Gefahr besteht, dass der Pedalhebel vor Abscherung des Lagerelementes um einen nicht tolerierbar großen Betrag in den Fahrgastraum hinein bewegt wird. Um diesem Umstand zu begegnen wird vorgeschlagen, bei einer erfindungsgemäßen Lösung an dem Gehäuse ein Sperrglied vorzusehen, das bei einem Unfall eine Ausweichbewegung des Pedals in Richtung Fahrgastinnenraum begrenzt.

Zur Festlegung des normalerweise lose zwischen Querträger und Pedallagerung eingesetzten Trennkeiles kann ferner zwischen Trennkeil und Gehäuse eine Sicherung zur Halterung am Gehäuse vorgesehen werden.

Ein Ausführungsbeispiel der Erfindung wird nachstehend unter Bezugnahme auf die Zeichnung näher erläutert.
Es zeigen:
- Figur 1:: eine räumliche Darstellung einer Vorrichtung zur Lagerung eines Pedalhebels,
- Figur 2:: eine Schnittdarstellung einer Vorrichtung zur Lagerung eines Pedalhebels
und
- Figur 3:: ein Lagerelement für eine Vorrichtung zur Lagerung eines Pedalhebels.

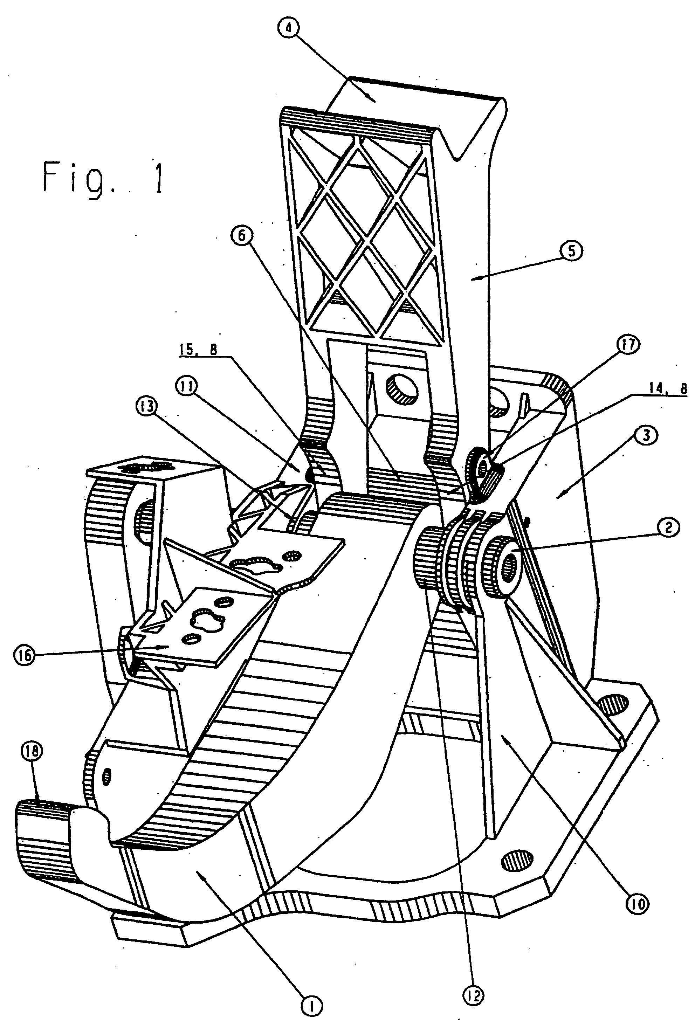

Die in der Figur 1 gezeigte Vorrichtung enthält zur Lagerung eines Pedalhebels ( 1 ) eines Kraftfahrzeuges ein Lagerelement (2), das schwenkbar in einem Gehäuse (3) aufgenommen ist. Das Gehäuse wird an der Stirnwand des Kraftfahrzeuges im Fußbereich des Kraftfahrzeuges befestigt. Ein Abschnitt eines Trennkeiles (5), der sich über eine Stützfläche (4) gegen ein Kraftfahrzeugbauteil (7) abstützt, ist zwischen einer Oberfläche des Gehäuses (3) und dem Lagerelement (2) aufgenommen. Das Kraftfahrzeugbauteil (7) ist hier ein Querträger, der deshalb für die Anlage des Trennkeiles nützlich ist, weil er auch bei schweren Unfällen zumeist nur geringförmig verformt wird, sodass eine sichere, nahezu unveränderliche Abstützung des Trennkeiles (5) möglich wird. Wie ersichtlich ist, wird der Trennkeil (5) lose zwischen Querträger (7) und dem Anlagebereich zwischen Lagerelement (2) und Gehäuse (3) eingesetzt. Eine aufwendige Montage kann daher entfallen. Lediglich als Verliersicherung für den Transport der Vorrichtung ist zwischen Trennkeil (5) und Gehäuse (3) an jedem Schenkel je eine Sicherung (17) vorhanden, die vorzugsweise aus weichem Material besteht, sodass die Scherwirkung im Bedarfsfall nicht beeinflusst wird.

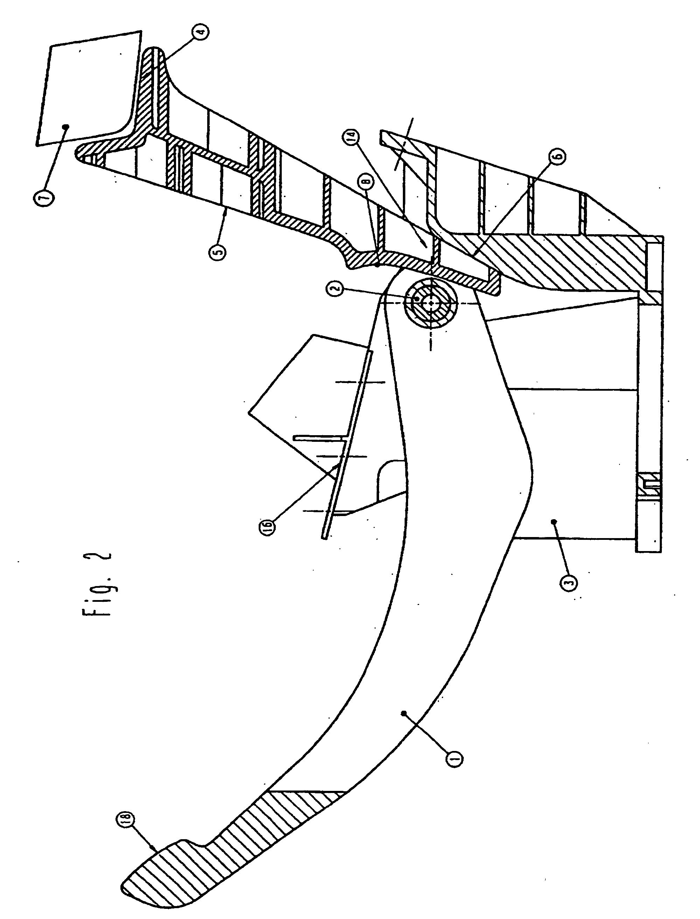

Der Trennkeil (5), der infolge einer durch einen Unfall verursachten äußeren Krafteinwirkung durch eine Relativbewegung zwischen Trennkeil (5) und Lagerelement (2) unter Aufbringung einer Scherkraft die Abscherung des Lagerelementes (2) bewirkt, besteht bei der dargestellten Ausführung aus einem Grundkörper, an dem zwei parallele Schenkel (14, 15) einteilig angeformt sind. Diese Schenkel (14, 15) weisen an der dem Lagerelement (2) zugewandten Seite jeweils eine Wirkfläche (8) auf, die vorliegend als eine bogenförmige Kontur gestaltet wurde. Die parallele Anordnung der Schenkel ist von Vorteil, da bei Einwirkung der äußeren Kraft die Scherkraft gleichmäßig an zwei unterschiedlichen Bereichen des Lagerelementes (2) aufgebracht werden kann, sodass das Lagerelement sicher und zuverlässig durchtrennbar ist, wenn hierzu die Notwendigkeit besteht. Das gezeigte Lagerelement (2) durchsetzt zwei zueinander beabstandete Wangen (10, 11) des Gehäuses (3). Der Pedalhebel ( 1 ) ist etwa mittig zwischen diesen Wangen (10, 11) auf dem Lagerelement (2) angeordnet, sodass beiderseits des Pedalhebels (1) ein Abstand (12, 13) zwischen dem Pedalhebel (1) und der jeweils zugeordneten Wange (10 bzw. 11) vorhanden ist. Diese Abstände (12, 13) bilden Anlagebereiche für die Wirkflächen (8) des Trennkeiles (5) an dem Lagerelement (2). Die Abstände (12, 13) sollten nicht wesentlich größer sein, als die Breite der Schenkel (14, 15). Auf der der Wirkfläche (8) des Trennkeiles (5) gegenüberliegenden Seite liegt der Trennkeil (5) an einer als Widerlager (6) ausgebildeten Gehäuseoberfläche an. Aus der Schnittdarstellung in Figur 2 ist ersichtlich, dass das Widerlager (6) und die zugeordnete Oberfläche des Trennkeiles (5) ebene Oberflächen sind, die eine Gleitbewegung der Bauteile erlauben.

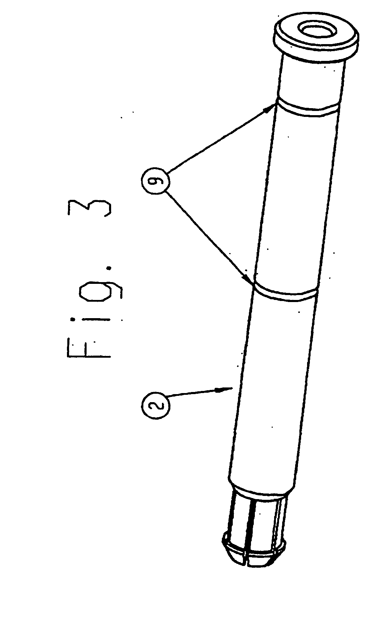

Das Lagerelement weist wie dies aus der Figur 3 hervorgeht zwei Sollbruchstellen (9) auf und ist hierbei als einteiliger Lagerbolzen ausgeführt.

Zur Vermeidung einer unzulässig weiten Bewegung des Pedalhebels in den Fahrgastraum hinein wird an dem Gehäuse (3) ein Sperrglied (16) angebracht, das bei einem Unfall die Ausweichbewegung des Pedals in Richtung Fahrgastinnenraum begrenzt.

### Bezugszeichenliste:

- 1: Pedalhebel
- 2: Lagerelement
- 3: Gehäuse
- 4: Stützfläche
- 5: Trennkeil
- 6: Widerlager
- 7: Kraftfahrzeugbauteil
- 8: Wirkfläche
- 9: Sollbruchstelle
- 10: Wange
- 11: Wange
- 12: Abstand
- 13: Abstand
- 14: Schenkel
- 15: Schenkel
- 16: Sperrglied
- 17: Sicherung
- 18: Trittfläche

## Patentansprüche

1. Vorrichtung zur Lagerung eines Pedalhebels (1) eines Kraftfahrzeuges, der um wenigstens ein Lagerelement (2) schwenkbar in einem Gehäuse (3) aufgenommen ist,
**dadurch gekennzeichnet, dass**
zumindest ein Abschnitt eines sich über eine Stützfläche (4) gegen ein Kraftfahrzeugbauteil (7) abstützenden Trennkeiles (5), der infolge einer durch einen Unfall verursachten äußeren Krafteinwirkung durch eine Relativbewegung zwischen Trennkeil (5) und Lagerelement (2) unter Aufbringung einer Scherkraft die Abscherung des Lagerelementes (2) bewirkt, zwischen einer Oberfläche des Gehäuses (3) und dem Lagerelement (2) aufgenommen ist.

2. Vorrichtung zur Lagerung eines Pedalhebels nach Anspruch 1,
**dadurch gekennzeichnet, dass**
an dem Gehäuse (3) ein Widerlager (6) zur Anlage und gleitbeweglichen Führung des Trennkeiles (5) vorhanden ist.

3. Vorrichtung zur Lagerung eines Pedalhebels nach einem der vorstehend genannten Ansprüche,
**dadurch gekennzeichnet, dass**
der Trennkeil (5) auf der dem Lagerelement (2) zugewandten Seite mindestens eine keilförmige oder bogenförmige Wirkfläche (8) aufweist.

4. Vorrichtung zur Lagerung eines Pedalhebels nach Anspruch 3,
**dadurch gekennzeichnet, dass**
das Lagerelement (2) zwei zueinander beabstandete Wangen (10, 11) des Gehäuses (3) durchsetzt, der Pedalhebel (1) etwa mittig zwischen diesen Wangen (10, 11) auf dem Lagerelement (2) angeordnet und beiderseits des Pedalhebels ( 1 ) ein Abstand (12, 13) zwischen dem Pedalhebel (1) und der jeweils zugeordneten Wange (10 bzw. 11) vorhanden ist, sodass der zumindest in diesem Bereich mit zwei Schenkeln (14, 15) ausgestattete Trennkeil (5) einerseits an dem Lagerelement (2) und andererseits an dem Widerlager (6) anliegt.

5. Vorrichtung zur Lagerung eines Pedalhebels nach einem der vorstehend genannten Ansprüche,
**dadurch gekennzeichnet, dass**
das Gehäuse (3) an der Stirnwand im Fußbereich der Fahrerseite des Kraftfahrzeuges befestigt und das Kraftfahrzeugbauteil (7) ein Querträger ist.

6. Vorrichtung zur Lagerung eines Pedalhebels nach einem der vorstehend genannten Ansprüche,
**dadurch gekennzeichnet, dass**
das mindestens eine Sollbruchstelle (9) aufweisende Lagerelement (2) ein einteiliger oder ein zweiteiliger Lagerbolzen ist.

7. Vorrichtung zur Lagerung eines Pedalhebels nach einem der vorstehend genannten Ansprüche,
**dadurch gekennzeichnet, dass**
an dem Gehäuse (3) ein Sperrglied (16) vorhanden ist, das bei einem Unfall eine Ausweichbewegung des Pedals in Richtung Fahrgastinnenraum begrenzt.

8. Vorrichtung zur Lagerung eines Pedalhebels nach einem der vorstehend genannten Ansprüche,
**dadurch gekennzeichnet, dass**
der Trennkeil (5) eine Sicherung (17) zur Halterung am Gehäuse (3) aufweist.

## Claims

1. Device for mounting a pedal lever (1) of a motor vehicle, which lever is accommodated in a housing (3) in such a manner as to be pivotable about at least one bearing element (2),
**characterised in that**
at least one section of a separating wedge (5), which is supported via a support surface (4) against a motor vehicle component (7) and which as a consequence of the action of an external force caused by an accident brings about the shearing off of the bearing element (2) due to a relative movement between the separating wedge (5) and the bearing element (2) by application of a shearing force, is accommodated between a surface of the housing (3) and the bearing element (2).

2. Device for mounting a pedal lever according to Claim 1,
**characterised in that**
an abutment (6) for seating and slidingly movably guiding the separating wedge (5) is present on the housing (3).

3. Device for mounting a pedal lever according to one of the preceding claims,
**characterised in that**
the separating wedge (5) has a wedge-shaped or arcuate active surface (8) on the side facing the bearing element (2).

4. Device for mounting a pedal lever according to Claim 3,
**characterised in that**
the bearing element (2) traverses two cheeks (10, 11) of the housing (3) which are spaced apart from each other, the pedal lever (1) is arranged on the bearing element (2) approximately centrally between these checks (10, 11) and there is a spacing (12, 13) between the pedal lever (1) and the respectively associated cheek (10 and 11) on both sides of the pedal lever (1), so that the separating wedge (5), which is provided with two legs (14, 15) at least in this area, lies against the bearing element (2) on the one hand and against the abutment (6) on the other hand.

5. Device for mounting a pedal lever according to one of the preceding claims,
**characterised in that**
the housing (3) is fastened to the front wall in the foot area of the driver's side of the motor vehicle, and the motor vehicle component (7) is a crossbeam.

6. Device for mounting a pedal lever according to one of the preceding claims,
**characterised in that**
the bearing element (2), which has at least one predetermined breaking point (9), is a one-part or two-part bearing bolt.

7. Device for mounting a pedal lever according to one of the preceding claims,
**characterised in that**
a blocking member (16), which limits an evasive movement of the pedal in the direction of the passenger compartment during an accident, is present on the housing (3).

8. Device for mounting a pedal lever according to one of the preceding claims,
**characterised in that**
the separating wedge (5) has a securing means (17) for holding on the housing (3).

## Revendications

1. Dispositif pour le logement d'un levier de pédale (1) l'un véhicule automobile, qui est aménagé autour d'au moins un élément de palier (2) à pivotement dans un boîtier (3), **caractérisé en ce qu'**au moins une section d'une cale de séparation (5) s'appuyant via une surface d'appui (4) contre un élément de construction (7) de véhicule, laquelle cale provoque, à la suite de l'application de forces extérieures dues à un accident, par un déplacement relatif entre la cale de séparation (5) et l'élément de palier (2), le cisaillement de l'élément de palier (2), est logée entre une surface du boîtier (3) et l'élément de palier (2).

2. Dispositif pour le logement d'un levier de pédale selon la revendication 1, **caractérisé en ce qu'**une butée (6) est présente sur le boîtier (3) pour l'application et le guidage par glissement de la cale de séparation (5).

3. Dispositif pour le logement d'un levier de pédale selon l'une quelconque des revendications précédentes, **caractérisé en ce que** la cale de séparation (5) présente, sur le côté tourné vers l'élément de palier (2), au moins une surface active (8) en forme de coin ou d'arc.

4. Dispositif pour le logement d'un levier de pédale selon la revendication 3, **caractérisé en ce que** l'élément de palier (2) traverse deux joues (10, 11) du boîtier (3) distantes l'une de l'autre, le levier de pédale (1) est situé approximativement au centre entre ces joues (10, 11) sur l'élément de palier (2) et il y a, des deux côtés du levier de pédale (1), une distance (12, 13) entre le levier de pédale (1) et la joue (10 ou 11) qui lui est affectée respectivement de sorte que la cale de séparation (5) équipé au moins dans cette zone de deux branches (14, 15) soit appliquée, d'une part, sur l'élément de palier (2) et, d'autre part, sur la butée (6).

5. Dispositif pour le logement d'un levier de pédale selon l'une quelconque des revendications précédentes, **caractérisé en ce que** le boîtier (3) est fixé sur la paroi frontale dans l'espace pieds du côté du conducteur du véhicule et **en ce que** l'élément de construction (7) du véhicule est une traverse.

6. Dispositif pour le logement d'un levier de pédale selon l'une quelconque des revendications précédentes, **caractérisé en ce que** l'élément de palier présentant au moins un point destiné à la rupture (9) est un axe de palier en une ou deux parties.

7. Dispositif pour le logement d'un levier de pédale selon l'une quelconque des revendications précédentes, **caractérisé en ce qu'**il y a sur le boîtier (3) un élément de verrouillage (16) qui, lors d'un accident, limite un mouvement de déviation de la pédale en direction de l'habitacle.

8. Dispositif pour le logement d'un levier de pédale selon l'une quelconque des revendications précédentes, **caractérisé en ce que** la cale de séparation (5) présente un dispositif de sécurité (17) pour la retenir sur le boîtier (3).
